# EUROPEAN PATENT APPLICATION

(11) **EP 4 231 635 A1**
(43) Date of publication of application: **23.08.2023**
(21) Application number: 23154376.0
(22) Date of filing: 01.02.2023
(51) Int. Cl.: H04N 13/111, H04N 13/128

(54) **EFFICIENT DYNAMIC OCCLUSION BASED ON STEREO VISION WITHIN AN AUGMENTED OR VIRTUAL REALITY APPLICATION**

(30) Priority: 16.02.2022 US 202263310935 P; 22.12.2022 US 202218087483
(71) Applicant: Meta Platforms Technologies, LLC, Menlo Park, CA 94025 (US)
(72) Inventor: SU, Shuochen, Menlo Park, 94025 (US); TILMON, Brevin, Menlo Park, 94025 (US)
(74) Representative: Murgitroyd & Company

(57) **Abstract**

A binary depth mask model is trained for use in occlusion within a mixed reality application. The training leverages information about virtual object positions and depths that is inherently available to the system as part of rendering of virtual objects. Training is performed on a set of stereo images, a set of binary depth masks corresponding to the stereo images, and a depth value against which object depth is evaluated. Given this input, the training outputs the binary depth mask model, which when given a stereo image as input outputs a depth binary depth mask indicating which pixels of the stereo image are nearer, or father away, than the depth value. The depth mask model can be applied in real time to handle occlusion operations when compositing a given real-world stereo image with virtual objects.

## Description

### FIELD OF ART

This disclosure relates generally to computer graphics, and more particularly, to training and use of models for efficiently occluding objects within an augmented or virtual reality scene.

### BACKGROUND

Within three-dimensional graphics applications, such as 3D games, virtual words, or the like, occlusion is a key operation required to properly render a scene. Occlusion is the operation of obscuring objects that are behind other objects from the perspective of the virtual "camera" within a 3D scene. Without properly occluding an object, nonsensical images of a 3D scene could be rendered, such as rendering a scene of a castle from outside the castle, in which inhabitants of the castle are displayed in the foreground of a castle wall even though they are within the castle walls, and hence should be invisible.

A number of general techniques exist for occlusion. However, while appropriate for non-real-time applications, such as rendering a high-quality image for later static use, such as display within a film, these techniques are too computationally-intensive (and hence slow) for situations in which dynamic, real-time occlusion is needed, such as within interactive applications like electronic games or 3D virtual worlds in which real-world imagery must be composited with virtual objects. For such applications, a more efficient approach is needed to make it possible to render a scene with occlusion in a short enough time that users will have a favorable experience.

### SUMMARY

A binary depth mask model is trained for use in occlusion within an augmented or virtual reality (hereinafter "mixed reality") application. The training leverages information about virtual object positions and depths that is inherently available to the system as part of the rendering of virtual objects.

In some embodiments, a binary depth mask model is trained based on a set of stereo images, a set of binary depth masks corresponding to the stereo images (or disparity maps from which the binary depth masks are derived), and a depth value against which object depth is evaluated. Given this input, the training process outputs the binary depth mask model, which when given a stereo image as input outputs a depth binary depth mask indicating which pixels of the stereo image are nearer, or father away, than the depth value. The depth mask model can be applied in real time to handle occlusion operations when compositing a given stereo image with virtual objects.

In some embodiments, a separate binary depth mask model is trained for each of a set of different depths. When performing occlusion in a stereo image with respect to a particular virtual object, the rendering system selects a binary depth mask model with a corresponding depth value that is closest to the depth value of the virtual object with respect to the current "camera" viewpoint in the scene. In some embodiments, multiple separate logical binary depth mask models are achieved using a single binary depth mask model, where a desired depth is input as a parameter to the model. When the text refers hereinafter to multiple binary depth mask models, those models could be implemented within multiple distinct depth mask models (one per depth value), or a single depth mask model in which the depth level is a parameter.

The binary depth mask model can be much lighter-weight than those employed by more general approaches to occlusion. The light weight of the model allows it to be used at runtime much more quickly than those used in more general approaches, making their use within interactive mixed-reality feasible.

In accordance with a first aspect of the present disclosure, there is provided a computer-implemented method for occluding of a virtual object within a physical scene by a virtual reality or augmented reality application, the method comprising: obtaining a stereo image of a physical scene from a camera; determining at least one depth value of a virtual object to be composited by the application with the stereo image of the physical scene; determining a depth mask model corresponding to the depth value of the virtual object; obtaining a depth mask by applying the depth mask model to the stereo image of the physical scene; occluding a portion of the virtual object based on the obtained depth mask; rendering a non-occluded portion of the virtual object within the stereo image; and displaying the rendered portion of the virtual object.

In some embodiments, the computer-implemented method may further comprise training the depth mask model, the training comprising: obtaining, as training input: a plurality of stereo images, a plurality of binary depth masks corresponding to the plurality of stereo images, and the depth value.

In some embodiments, the plurality of stereo images may comprise both synthetic stereo images and non-synthetic stereo images obtained from a camera, the computer- implemented method further comprising: for the non-synthetic stereo images, generating corresponding disparity maps using light detection and ranging (LiDAR); and generating the binary depth masks that correspond to the non-synthetic stereo images from the disparity maps.

In some embodiments, the training set may comprise both synthetic stereo images and non-synthetic stereo images obtained from a camera, the computer-implemented method further comprising: generating the synthetic stereo images from a given three-dimensional model using rendering software; generating disparity maps for the synthetic stereo images using pixel depth values calculated by the rendering software; and generating the binary depth masks that correspond to the non-synthetic stereo images from the disparity maps.

In some embodiments, the computer-implemented method may further comprise determining a second depth value lesser than the depth value and corresponding to a nearer portion of the physical object than a portion corresponding to the depth value; determining a second depth mask model corresponding to the second depth value; obtaining a second depth mask by applying the depth mask model to the stereo image of the physical scene; occluding a portion of the virtual object based on the second obtained depth mask, the second obtained depth mask occluding a different portion of the virtual object than the obtained depth mask; and rendering a non-occluded portion of the virtual object within the stereo image.

In some embodiments, the computer-implemented method may further comprise determining a second depth value corresponding to an intrusion detection distance from a user; determining a second depth mask model corresponding to the second depth value; obtaining a second depth mask by applying the second depth mask model to the stereo image of the physical scene; identifying, using the second depth mask model, objects closer than the second depth value; determining that the identified objects represent hazards; responsive to determining that the identified objects represent hazards, issuing a warning to the user.

In accordance with a further aspect of the present disclosure, there is provided a non-transitory computer-readable storage medium storing instructions that when executed by a computer processor perform actions comprising: obtaining a stereo image of a physical scene from a camera; determining at least one depth value of a virtual object to be composited by the application with the stereo image of the physical scene; determining a depth mask model corresponding to the depth value of the virtual object; obtaining a depth mask by applying the depth mask model to the stereo image of the physical scene; occluding a portion of the virtual object based on the obtained depth mask; rendering a non-occluded portion of the virtual object within the stereo image; and displaying the rendered portion of the virtual object.

In some embodiments, the actions may further comprise training the depth mask model, the training comprising: obtaining, as training input: a plurality of stereo images, a plurality of binary depth masks corresponding to the plurality of stereo images, and the depth value.

In some embodiments, the plurality of stereo images may comprise both synthetic stereo images and non-synthetic stereo images obtained from a camera, the computer- implemented method further comprising: for the non-synthetic stereo images, generating corresponding disparity maps using light detection and ranging (LiDAR); and generating the binary depth masks that correspond to the non-synthetic stereo images from the disparity maps.

In some embodiments, the training set may comprise both synthetic stereo images and non-synthetic stereo images obtained from a camera, the computer-implemented method further comprising: generating the synthetic stereo images from a given three-dimensional model using rendering software; generating disparity maps for the synthetic stereo images using pixel depth values calculated by the rendering software; and generating the binary depth masks that correspond to the non-synthetic stereo images from the disparity maps.

In some embodiments, the actions may further comprise: determining a second depth value lesser than the depth value and corresponding to a nearer portion of the physical object than a portion corresponding to the depth value; determining a second depth mask model corresponding to the second depth value; obtaining a second depth mask by applying the depth mask model to the stereo image of the physical scene; occluding a portion of the virtual object based on the second obtained depth mask, the second obtained depth mask occluding a different portion of the virtual object than the obtained depth mask; and rendering a non-occluded portion of the virtual object within the stereo image.

In some embodiments, the actions may further comprise: determining a second depth value corresponding to an intrusion detection distance from a user; determining a second depth mask model corresponding to the second depth value; obtaining a second depth mask by applying the second depth mask model to the stereo image of the physical scene; identifying, using the second depth mask model, objects closer than the second depth value; determining that the identified objects represent hazards; responsive to determining that the identified objects represent hazards, issuing a warning to the user.

In accordance with a further aspect of the present disclosure, there is provided a computer device comprising: a computer processor; and a non-transitory computer-readable storage medium storing instructions that when executed by the computer processor perform actions comprising: obtaining a stereo image of a physical scene from a camera; determining at least one depth value of a virtual object to be composited by the application with the stereo image of the physical scene; determining a depth mask model corresponding to the depth value of the virtual object; obtaining a depth mask by applying the depth mask model to the stereo image of the physical scene; occluding a portion of the virtual object based on the obtained depth mask; rendering a non-occluded portion of the virtual object within the stereo image; and displaying the rendered portion of the virtual object.

In some embodiments, the actions may further comprise training the depth mask model, the training comprising: obtaining, as training input: a plurality of stereo images, a plurality of binary depth masks corresponding to the plurality of stereo images, and the depth value.

In some embodiments, the plurality of stereo images may comprise both synthetic stereo images and non-synthetic stereo images obtained from a camera, the computer- implemented method further comprising: for the non-synthetic stereo images, generating corresponding disparity maps using light detection and ranging (LiDAR); and generating the binary depth masks that correspond to the non-synthetic stereo images from the disparity maps.

In some embodiments, the training set may comprise both synthetic stereo images and non-synthetic stereo images obtained from a camera, the computer-implemented method further comprising: generating the synthetic stereo images from a given three-dimensional model using rendering software; generating disparity maps for the synthetic stereo images using pixel depth values calculated by the rendering software; and generating the binary depth masks that correspond to the non-synthetic stereo images from the disparity maps.

In some embodiments, the actions may further comprise: determining a second depth value lesser than the depth value and corresponding to a nearer portion of the physical object than a portion corresponding to the depth value; determining a second depth mask model corresponding to the second depth value; obtaining a second depth mask by applying the depth mask model to the stereo image of the physical scene; occluding a portion of the virtual object based on the second obtained depth mask, the second obtained depth mask occluding a different portion of the virtual object than the obtained depth mask; and rendering a non-occluded portion of the virtual object within the stereo image.

In some embodiments, the actions may further comprise: determining a second depth value corresponding to an intrusion detection distance from a user; determining a second depth mask model corresponding to the second depth value; obtaining a second depth mask by applying the second depth mask model to the stereo image of the physical scene; identifying, using the second depth mask model, objects closer than the second depth value; determining that the identified objects represent hazards; responsive to determining that the identified objects represent hazards, issuing a warning to the user.

The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the inventive subject matter. It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

FIG. 1 is a block diagram illustrating one example of a hardware environment in which binary depth mask models are trained and used to perform occlusion operations for mixed-reality rendering, according to some embodiments.
FIG. 2 is a data flow diagram illustrating operations performed by the model training module 110 while training the binary depth mask models, according to some embodiments.
FIGS. 3A and 3B are perspective views of embodiments in which headset client devices are implemented as an eyewear device and as a head-mounted display, respectively.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### System Overview

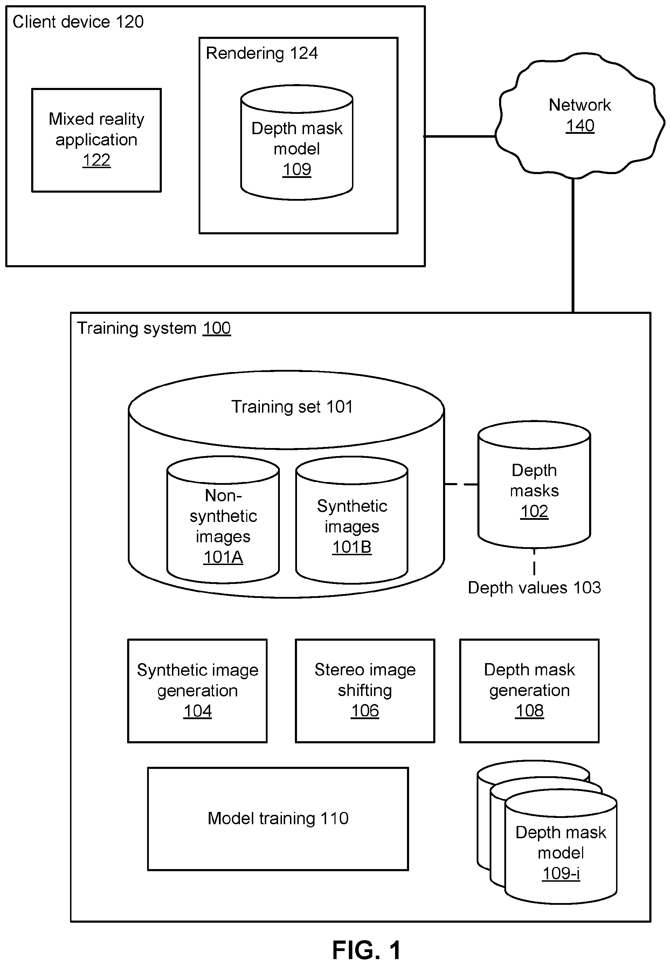

FIG. 1 is a block diagram illustrating one example of a hardware environment in which binary depth mask models are trained and used to perform occlusion operations for mixed-reality rendering, according to some embodiments. FIG. 1 illustrates a training system 100 on which the binary depth mask models are trained, and client devices 120 with a mixed-reality rendering module 124 that uses the binary depth mask models to render a mixed-reality scene that includes virtual objects.

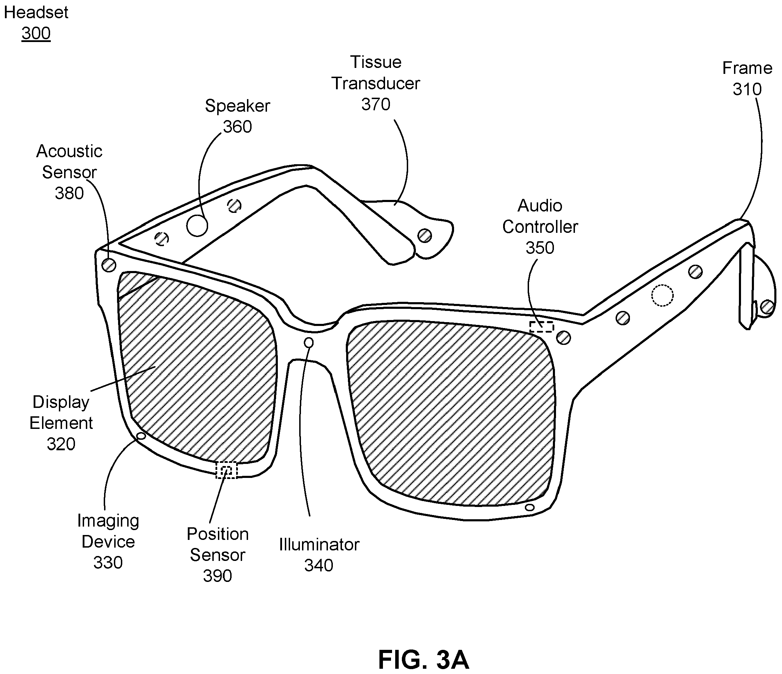

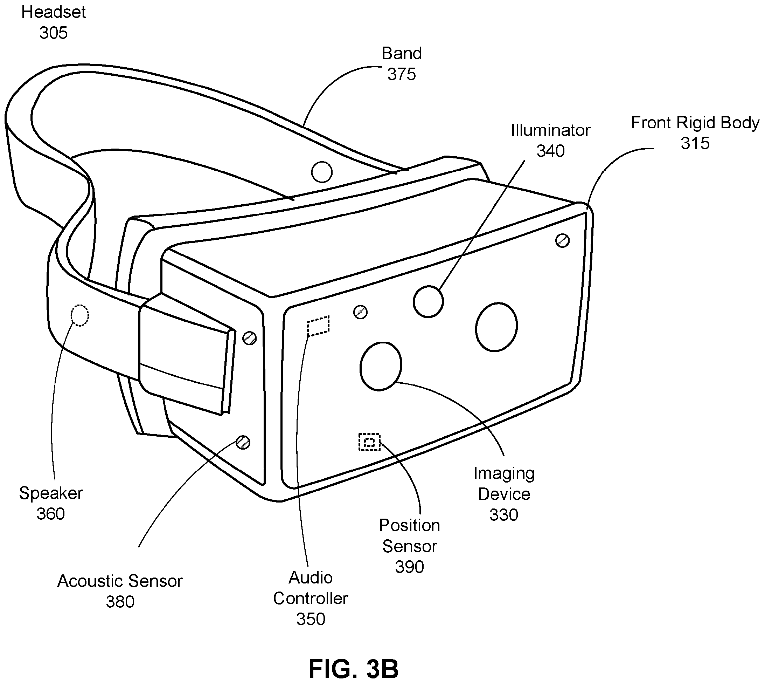

The client devices 120 can be wearable headset devices providing users with an immersive audiovisual experience, which enhances the experience of the rendered scenes. Two examples of such headset wearable devices are described below with respect to FIGS. 3A and 3B, which respectively illustrate a virtual reality (VR) head-mounted display (HMD) and augmented reality (AR) eyewear. Other client devices 120-such as desktop computers, laptop computers, video game consoles, tablets, smartphones, or the like-could also be used, provided that they have the ability to obtain stereo images.

The client devices 120 have a mixed reality application 122, such as a 3D game, a virtual world, or the like, that creates a graphical composite of real-world scenes obtained from a camera with three-dimensional, virtual objects. For example, the application 122 could be a game displaying a fantasy world made up of virtual objects, but also displaying certain real-objects captured by the camera of the client device 120, such as the user's hand when extended forward, where nearer objects such as the hand should occlude virtual objects further away in the background. As another example, the application could be a home-decoration application in which virtual furniture can be placed within the walls of the user's home; in such an environment, the virtual furniture located (in virtual space) behind a physical wall should be occluded by the physical wall. (The application 122 may be "native" on the client device 120, or it may be partly stored and executed on other systems, as in the case of web-based applications with certain code downloaded over a network 140 and executed on the client device 120, and certain code being executed on a server.) The application 122 uses a rendering module 124 to handle the graphical rendering of mixed reality content stylized within some or all of its scenes; the rendering module 124 in turn uses one or more binary depth mask models 109 in its occlusion operations.

The training system 100 is a system composed of one or more computing devices, such as workstation computers and computer networks connecting them, that singly or collectively train the binary depth mask model(s) 109 based on a set of images, a corresponding set of depth maps, and an associated depth value. In some embodiments, there are many workstation systems, each with one or more graphics processing units (GPUs) that are used to train corresponding models. Although the training system 100 is illustrated as being separate from the clients 120, in some embodiments the training is performed on a client device 120 itself.

The network 140 may be any suitable communications network for data transmission. In an embodiment such as that illustrated in FIG. 1, the network 140 uses standard communications technologies and/or protocols and can include the Internet. In another embodiment, the entities use custom and/or dedicated data communications technologies. Although in FIG. 1 the network is illustrated as linking the client device 120 and the training system 100, in some embodiments the client devices 120, and the training system 100, need not necessarily be connected to a network.

The training system 100 and the rendering module 124 of the client device 120 are now described in more detail below.

The training system 100 includes or accesses a training set 101 of stereo images. ("Stereo images" are pairs of images of the same scene captured from a slightly different vantage point, similar to the way in which a human obtains images of the same scene from two different, slightly-offset eyes.) In the embodiment of FIG. 1, the training set includes both "synthetic" and "non-synthetic" stereo images, though in some embodiments only one or the other are present. The "non-synthetic" images are images of real-world, physical scenes captured by a camera; the "synthetic" images, in contrast, are high-quality virtual images generated by rendering a 3D model.

The training system 100 further includes, for each of the images of the training set 101, a binary depth mask 102. A binary depth mask 102 indicates-for the image 101 to which it corresponds, and for a corresponding depth value 103 at which it was computed-which pixels of the image are nearer than the corresponding depth value with, and which are further away. (The depth value 103 indicates a distance from the camera viewpoint from which the image was captured by a camera, or rendered by a renderer.) The binary depth mask 102 for a real-world, non-synthetic image can be generated at the time that the non-synthetic image was captured by a physical technique such as light detection and ranging (LiDAR).

The training system 100 further includes a synthetic image generation module 104 that generates synthetic images 101B for use in the training set 101, along with corresponding binary depth masks 102. The synthetic image generation module 104 renders high-quality images 101B from a given set of 3D models. In some embodiments, a path tracing algorithm is used for this rendering. Additionally, since the synthetic image generation module 104 itself renders the images 101B from the 3D models, as a result of the rendering process the module 104 inherently has the depth values of each pixel of the rendered images, and therefore can directly construct the binary depth masks 102 for the corresponding images 101B as part of the rendering.

The training system 100 further includes a stereo image shifting module that modifies image features extracted for one of each of the stereo image pairs (e.g., the "right eye" image). This is used during feature vector extraction (discussed later below) to normalize the image features to account for the viewpoint disparity between the two images in a given stereo image pair. In some embodiments, the extracted image features are shifted along the epipolar line by a distance derived from the target depth value, such that when combined with the features from the other image of the pair and provided as input to a segmentation network (e.g., to segmentation network 210B, discussed below), the segmentation network will make on inference about whether a given pixel location is in front or behind the depth value, based on the direction of the matched feature vector.

The training system 100 further includes a depth mask generation module 108 that generates binary depth masks from disparity maps containing continuous disparity values that (in effect) indicate for each pixel a distance from the camera origin for that pixel. The disparity maps are generated by converting the ground truth depth map according to the relationship: d = f^{∗}(b / z), where *d* denotes the disparity, *ƒ* denotes the camera's focus length, *b* denotes the stereo baseline, and z denotes the depth value. Having disparity maps allows for on-the-fly generation of binary depth masks during training based on a randomly selected disparity plane.

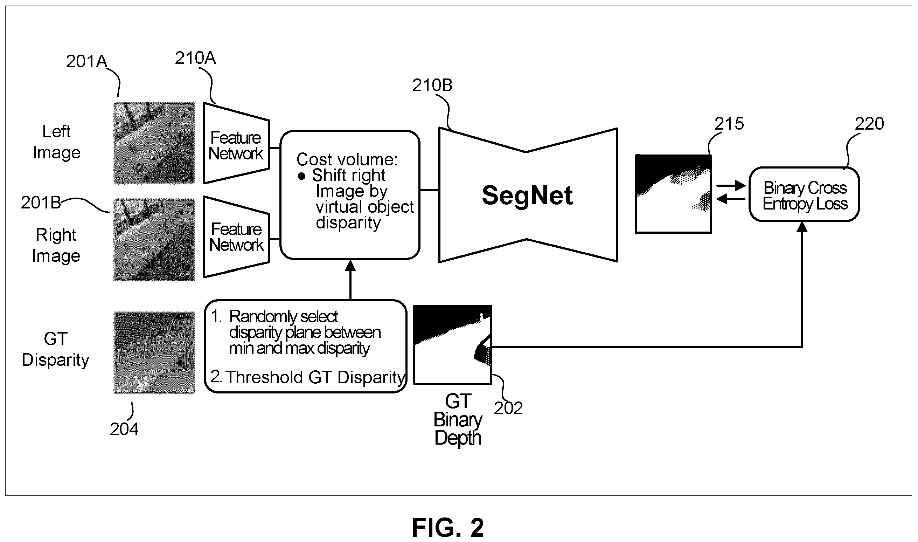

The training system 100 further includes a model training module 110 that trains the depth mask model 109 from the training set 101 and corresponding binary depth masks (e.g., using the modules 104, 106, and 108). The operations of the training system 100 are now described in more detail with respect to FIG. 2.

FIG. 2 is a data flow diagram illustrating operations performed by the model training module 110 while training the binary depth mask model, according to some embodiments. As previously noted, the inputs to the model training are the stereo images from the training set 101, their corresponding binary depth masks 102, and the depth values 103 with respect to which the binary depth masks were computed. The feature extractors 210A extract image features from the images 201, and the segmentation network 210B takes the extracted image features as input and outputs a binary depth mask for the given depth value. In some embodiments, the binary depth mask models 109 are implemented as convolutional neural networks (CNNs); in such embodiments, the feature extractors 210A are implemented with a first subset of the layers of the neural network, and the segmentation network 210B is implemented with the remainder of the layers.

For some or all of the stereo image pairs 201A, 201B from the stereo images of the training set 101, the image pairs 201 are input to the model training module 110, along with their corresponding disparity maps 204 and the depth value for which they were computed. the feature extractors 210 extract image features from the images 201, and the depth mask generation module 108 converts the disparity maps 204 to the corresponding binary depth masks 202. All the image pairs 201 for a given depth value serve as the input to segmentation network 210B, which outputs an interim binary depth mask 215 representing the predicted binary depth mask for the current trained state of the depth mask model 109 (which, as noted, may be embodied by the feature extractors 210A and segmentation network 210B). The interim binary depth mask 215 is compared to the "ground truth" binary depth mask 202, and a loss 220 is computed based on the comparison according to a given loss function (e.g., binary cross entropy loss). Based on the value of the loss 220, the depth mask model 109 is modified, and the process is repeated (e.g., for a given number of iterations, or until a sufficiently small loss is achieved). The final state of the depth mask model 109 then serves as the depth mask model for the depth value according to which the model 109 was trained.

In some embodiments, a binary depth mask model 109 is trained for each of a set of different depth values. (The training for each different depth value can use the same images 201, but the disparity map 204 / binary depth mask 202 will differ according to the depth value.) Having models 109 for different depth values allows the rendering module 124 to be able to perform occlusion for different virtual objects located at different distances from the camera origin. Relatedly, having different models 109 for different depth values (or a single model 109 encompassing different depth values) can be valuable for the same virtual object if that virtual object has significant depth. In such cases, binary depth masks for different depth values corresponding to the virtual object may be obtained and used to occlude portions of the virtual object that have larger depth values (i.e., that are father away).

Returning again to FIG. 1, the trained binary depth mask models 109 are distributed to the client devices having mixed reality rendering modules 124. Depending on the embodiment and the capabilities of the client device 120, the models could be "manually" preinstalled on the device 120 at the time that the device is created and made available for sale, and/or the models could be transferred to the device over a computer network, such as the network 140. For devices 120 that are networked, new versions of the models 109 may be distributed to the devices as the models are updated on the training system 100.

The rendering module 124 uses the binary depth mask models 109 to perform occlusion when rendering mixed-reality scenes. As one specific concrete example, the client device 120 could be a headset (e.g., an OCULUS QUEST headset), and the mixed reality application 122 could be a game in which user of the client device 120 can explore virtual worlds, while seeing certain real-world objects (e.g., the user's hands) that are within the user's view appropriately integrated into the virtual scene displayed on the headset display. Further assume that the application 122 were rendering an outdoor scene with a friendly non-player character standing 5 feet away in the virtual environment, that the user extended his hand in greeting to the character within his field of view, and that the camera of the headset took a stereo image of the user's apartment, which includes the user's extended hand and walls, furniture, or other background objects. The rendering module 124 could render the scene appropriately by inputting the stereo image from the camera to the depth mask model 109 corresponding to a depth value of 5 feet (the distance at which the application 122 "knows" the non-player character is standing from the user's viewpoint) to obtain a depth mask for the stereo image. In the example, the depth mask might indicate that the pixels corresponding to the user's extended hand in the stereo image represent a location closer than 5 feet, but that the rest of the pixels of the stereo represent locations beyond 5 feet. Accordingly, the rendering module 124 would display the pixels corresponding to the user's hand within the final composite image displayed to the user, but would occlude the remainder of the pixels from the camera image, instead displaying the non-occluded portions of the rendered image of the virtual scene (e.g., the virtual scene, but with the user's extended hand occluding part of the non-player character).

Another use of the binary depth masks produced by the binary depth mask models 109 is to perform mixed-reality intrusion detection-that is, to determine whether a real-world object presenting a potential hazard is within some threshold real-world distance of the user. Intrusion detection is useful (for example) when the client device is an immersive headset such as that in FIG. 3B which could otherwise prevent the user from seeing hazards, such as walls, pets, sharp objects, and the like. To perform mixed-reality intrusion detection, the application 122 (or other software on the client device 120) applies the depth mask model 109 for a "safety" depth value (e.g., 5 feet) representing a region of safety around the user to the stereo image produced by the camera of the client device 120 to determine regions of the image that correspond to objects closer than that "safety" depth value. If regions closer than the safety depth value are identified, the application 122 (or other software) provides a warning to the user, such as an alert noise, flashing image, or the like. In some embodiments, before providing a warning, the application 122 (or other software) performs semantic image analysis on any identified portions to identify a corresponding object and to determine whether that object is known to pose a non-negligible danger.

In sum, the techniques disclosed herein are well-suited for performing occlusion within mixed-reality applications. They produce results that are more accurate than techniques such as semi-global matching (e.g., SGM), and more efficient for client devices to apply at runtime than more general techniques such as Pyramid Stereo Matching Network (PSMNet). This tradeoff between accuracy and speed produces pleasing visuals with relatively low latency, which works well for many mixed-reality scenarios.

### Example Headsets

FIG. 3A is a perspective view of a headset 300 implemented as an eyewear device, in accordance with one or more embodiments. In some embodiments, the eyewear device is a near eye display (NED). In general, the headset 300 may be worn on the face of a user such that media content (e.g., mixed-reality content) is presented using a display assembly and/or an audio system. However, the headset 300 may also be used such that content is presented to a user in a different manner. Examples of media content presented by the headset 300 include one or more images, video, audio, or some combination thereof. The headset 300 includes a frame, and may include, among other components, a display assembly including one or more display elements 320, a depth camera assembly (DCA), an audio system, and a position sensor 390. While FIG. 3A illustrates the components of the headset 300 in example locations on the headset 300, the components may be located elsewhere on the headset 300, on a peripheral device paired with the headset 300, or some combination thereof. Similarly, there may be more or fewer components on the headset 300 than what is shown in FIG. 3A.

The frame 310 holds the other components of the headset 300. The frame 310 includes a front part that holds the one or more display elements 320 and end pieces (e.g., temples) to attach to a head of the user. The front part of the frame 310 bridges the top of a nose of the user. The length of the end pieces may be adjustable (e.g., adjustable temple length) to fit different users. The end pieces may also include a portion that curls behind the ear of the user (e.g., temple tip, ear piece).

The one or more display elements 320 provide light to a user wearing the headset 300. As illustrated the headset includes a display element 320 for each eye of a user. In some embodiments, a display element 320 generates image light that is provided to an eyebox of the headset 300. The eyebox is a location in space that an eye of the user occupies while wearing the headset 300. For example, a display element 320 may be a waveguide display. A waveguide display includes a light source (e.g., a two-dimensional source, one or more line sources, one or more point sources, etc.) and one or more waveguides. Light from the light source is in-coupled into the one or more waveguides which outputs the light in a manner such that there is pupil replication in an eyebox of the headset 300. In-coupling and/or outcoupling of light from the one or more waveguides may be done using one or more diffraction gratings. In some embodiments, the waveguide display includes a scanning element (e.g., waveguide, mirror, etc.) that scans light from the light source as it is in-coupled into the one or more waveguides. Note that in some embodiments, one or both of the display elements 320 are opaque and do not transmit light from a local area around the headset 300. The local area is the area surrounding the headset 300. For example, the local area may be a room that a user wearing the headset 300 is inside, or the user wearing the headset 300 may be outside and the local area is an outside area. In this context, the headset 300 generates VR content. Alternatively, in some embodiments, one or both of the display elements 320 are at least partially transparent, such that light from the local area may be combined with light from the one or more display elements to produce augmented reality (AR) and/or mixed reality (MR) content.

In some embodiments, a display element 320 does not generate image light, and instead is a lens that transmits light from the local area to the eyebox. For example, one or both of the display elements 320 may be a lens without correction (non-prescription) or a prescription lens (e.g., single vision, bifocal and trifocal, or progressive) to help correct for defects in a user's eyesight. In some embodiments, the display element 320 may be polarized and/or tinted to protect the user's eyes from the sun.

In some embodiments, the display element 320 may include an additional optics block (not shown). The optics block may include one or more optical elements (e.g., lens, Fresnel lens, etc.) that direct light from the display element 320 to the eyebox. The optics block may, e.g., correct for aberrations in some or all of the image content, magnify some or all of the image, or some combination thereof.

The DCA determines depth information for a portion of a local area surrounding the headset 300. The DCA includes one or more imaging devices 330 and a DCA controller (not shown in FIG. 3A), and may also include an illuminator 340. In some embodiments, the illuminator 340 illuminates a portion of the local area with light. The light may be, e.g., structured light (e.g., dot pattern, bars, etc.) in the infrared (IR), IR flash for time-of-flight, etc. In some embodiments, the one or more imaging devices 330 capture images of the portion of the local area that include the light from the illuminator 340. In one embodiment, the captured images may include one or more images and/or videos of the user of the headset 300 (e.g., the user wears the headset 300 and stands in front of a mirror). In some embodiments, the captured images may include one or more images and/or videos of one or more separate headset users (e.g., the headset 300 captures images of the local area that includes multiple headset users). As illustrated, FIG. 3A shows a single illuminator 340 and two imaging devices 330. In alternate embodiments, there is no illuminator 340 and at least two imaging devices 330.

The DCA controller computes depth information for the portion of the local area using the captured images and one or more depth determination techniques. The depth determination technique may be, e.g., direct time-of-flight (ToF) depth sensing, indirect ToF depth sensing, structured light, passive stereo analysis, active stereo analysis (uses texture added to the scene by light from the illuminator 340), some other technique to determine depth of a scene, or some combination thereof.

The audio system provides audio content. The audio system includes a transducer array, a sensor array, and an audio controller 350. However, in other embodiments, the audio system may include different and/or additional components. Similarly, in some cases, functionality described with reference to the components of the audio system can be distributed among the components in a different manner than is described here. For example, some or all of the functions of the controller may be performed by a remote server. FIG. 3 discloses additional details of the audio system according to some embodiments.

The transducer array presents sound to the user. In some embodiments, the transducer array presents spatialized audio content based on one or more sound filters. The transducer array includes a plurality of transducers. A transducer may be a speaker 360 or a tissue transducer 370 (e.g., a bone conduction transducer or a cartilage conduction transducer). Although the speakers 360 are shown exterior to the frame 310, the speakers 360 may be enclosed in the frame 310. In some embodiments, instead of individual speakers for each ear, the headset 300 includes a speaker array comprising multiple speakers integrated into the frame 310 to improve directionality of presented audio content. The tissue transducer 370 couples to the head of the user and directly vibrates tissue (e.g., bone or cartilage) of the user to generate sound. The number and/or locations of transducers may be different from what is shown in FIG. 3A.

The sensor array detects sounds within the local area of the headset 300. The sensor array includes a plurality of acoustic sensors 380. An acoustic sensor 380 captures sounds emitted from one or more sound sources in the local area (e.g., a room). Each acoustic sensor is configured to detect sound and convert the detected sound into an electronic format (analog or digital). The acoustic sensors 380 may be acoustic wave sensors, microphones, sound transducers, or similar sensors that are suitable for detecting sounds.

In some embodiments, one or more acoustic sensors 380 may be placed in an ear canal of each ear (e.g., acting as binaural microphones). In some embodiments, the acoustic sensors 380 may be placed on an exterior surface of the headset 300, placed on an interior surface of the headset 300, separate from the headset 300 (e.g., part of some other device), or some combination thereof. The number and/or locations of acoustic sensors 380 may be different from what is shown in FIG. 3A. For example, the number of acoustic detection locations may be increased to increase the amount of audio information collected and the sensitivity and/or accuracy of the information. The acoustic detection locations may be oriented such that the microphone is able to detect sounds in a wide range of directions surrounding the user wearing the headset 300.

The audio controller 350 processes information from the sensor array that describes sounds detected by the sensor array. The audio controller 350 may comprise a processor and a computer-readable storage medium. The audio controller 350 may be configured to determine pose of the user, generate head-related transfer functions (HRTFs), dynamically update HRTFs, generate direction of arrival (DOA) estimates, track the location of sound sources, form beams in the direction of sound sources, classify sound sources, generate sound filters for the speakers 360, or some combination thereof.

The position sensor 390 generates one or more measurement signals in response to motion of the headset 300. The position sensor 390 may be located on a portion of the frame 310 of the headset 300. The position sensor 390 may include an inertial measurement unit (IMU). Examples of position sensor 390 include: one or more accelerometers, one or more gyroscopes, one or more magnetometers, another suitable type of sensor that detects motion, a type of sensor used for error correction of the IMU, or some combination thereof. The position sensor 390 may be located external to the IMU, internal to the IMU, or some combination thereof.

In some embodiments, the headset 300 may provide for simultaneous localization and mapping (SLAM) for a position of the headset 300 and updating of a model of the local area. For example, the headset 300 may include a passive camera assembly (PCA) that generates color image data. The PCA may include one or more RGB cameras that capture images of some or all of the local area. In some embodiments, some or all of the imaging devices 330 of the DCA may also function as the PCA. The images captured by the PCA and the depth information determined by thee DCA may be used to determine parameters of the local area, generate a model of the local area, update a model of the local area, or some combination thereof. Furthermore, the position sensor 390 tracks the position (e.g., location and pose) of the headset 300 within the room or other physical environment.

The audio system dynamically updates a customized HRTF model for the user. The audio system receives one or more images of the user captured by one or more imaging devices (e.g., the one or more imaging devices 330). The audio system determines a pose (e.g., torso shape, ear shape, head-torso orientation, etc.) of the user based on the captured images. The audio system dynamically updates the customized HRTF model based on the determined pose. The audio system generates one or more sound filters using the updated HRTF model and applies the sound filters to audio content to generate spatialized audio content. The audio system provides the spatialized audio content to the user via the speakers 360.

FIG. 3B is a perspective view of a headset 305 implemented as a head-mounted display (HMD), in accordance with one or more embodiments. In embodiments that describe an AR system and/or a MR system, portions of a front side of the HMD are at least partially transparent in the visible band (~380 nm to 750 nm), and portions of the HMD that are between the front side of the HMD and an eye of the user are at least partially transparent (e.g., a partially transparent electronic display). The HMD includes a front rigid body 315 and a band 375. The headset 305 includes many of the same components described above with reference to FIG. 3A, but modified to integrate with the HMD form factor. For example, the HMD includes a display assembly, a DCA, the audio system of FIG. 3A, and the position sensor 390. FIG. 3B shows the illuminator 340, a plurality of the speakers 360, a plurality of the imaging devices 330, a plurality of acoustic sensors 380, and the position sensor 390. The speakers 360 may be located in various locations, such as coupled to the band 375 (as shown), coupled to front rigid body 315, or may be configured to be inserted within the ear canal of a user.

### Additional Configuration Information

The foregoing description of the embodiments of the disclosure has been presented for the purpose of illustration; it is not intended to be exhaustive or to limit the disclosure to the precise forms disclosed. Persons skilled in the relevant art can appreciate that many modifications and variations are possible in light of the above disclosure.

Some portions of this description describe the embodiments of the disclosure in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the disclosure may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the disclosure may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based hereon. Accordingly, the disclosure of the embodiments is intended to be illustrative, but not limiting, of the scope of the disclosure, which is set forth in the following claims.

## Claims

1. A computer-implemented method for occluding of a virtual object within a physical scene by a virtual reality or augmented reality application, the method comprising:
obtaining a stereo image of a physical scene from a camera;
determining at least one depth value of a virtual object to be composited by the application with the stereo image of the physical scene;
determining a depth mask model corresponding to the depth value of the virtual object;
obtaining a depth mask by applying the depth mask model to the stereo image of the physical scene;
occluding a portion of the virtual object based on the obtained depth mask;
rendering a non-occluded portion of the virtual object within the stereo image; and
displaying the rendered portion of the virtual object.

2. The computer-implemented method of claim 1, further comprising training the depth mask model, the training comprising:
obtaining, as training input:
a plurality of stereo images,
a plurality of binary depth masks corresponding to the plurality of stereo images, and
the depth value.

3. The computer-implemented method of claim 2, wherein the plurality of stereo images comprises both synthetic stereo images and non-synthetic stereo images obtained from a camera, the computer- implemented method further comprising:
for the non-synthetic stereo images, generating corresponding disparity maps using light detection and ranging (LiDAR); and
generating the binary depth masks that correspond to the non-synthetic stereo images from the disparity maps.

4. The computer-implemented method of claim 2 or claim 3, wherein the training set comprises both synthetic stereo images and non-synthetic stereo images obtained from a camera, the computer-implemented method further comprising:
generating the synthetic stereo images from a given three-dimensional model using rendering software;
generating disparity maps for the synthetic stereo images using pixel depth values calculated by the rendering software; and
generating the binary depth masks that correspond to the non-synthetic stereo images from the disparity maps.

5. The computer-implemented method of any one of the preceding claims, further comprising:
determining a second depth value lesser than the depth value and corresponding to a nearer portion of the physical object than a portion corresponding to the depth value;
determining a second depth mask model corresponding to the second depth value;
obtaining a second depth mask by applying the depth mask model to the stereo image of the physical scene;
occluding a portion of the virtual object based on the second obtained depth mask, the second obtained depth mask occluding a different portion of the virtual object than the obtained depth mask; and
rendering a non-occluded portion of the virtual object within the stereo image.

6. The computer-implemented method of any one of the preceding claims, further comprising:
determining a second depth value corresponding to an intrusion detection distance from a user;
determining a second depth mask model corresponding to the second depth value;
obtaining a second depth mask by applying the second depth mask model to the stereo image of the physical scene;
identifying, using the second depth mask model, objects closer than the second depth value;
determining that the identified objects represent hazards;
responsive to determining that the identified objects represent hazards, issuing a warning to the user.

7. A non-transitory computer-readable storage medium storing instructions that when executed by a computer processor perform actions comprising:
obtaining a stereo image of a physical scene from a camera;
determining at least one depth value of a virtual object to be composited by the application with the stereo image of the physical scene;
determining a depth mask model corresponding to the depth value of the virtual object;
obtaining a depth mask by applying the depth mask model to the stereo image of the physical scene;
occluding a portion of the virtual object based on the obtained depth mask;
rendering a non-occluded portion of the virtual object within the stereo image; and
displaying the rendered portion of the virtual object.

8. The non-transitory computer-readable storage medium of claim 7, the actions further comprising training the depth mask model, the training comprising:
obtaining, as training input:
a plurality of stereo images,
a plurality of binary depth masks corresponding to the plurality of stereo images, and
the depth value.

9. The non-transitory computer-readable storage medium of claim 8, wherein:
i. the plurality of stereo images comprises both synthetic stereo images and non-synthetic stereo images obtained from a camera, the computer- implemented method further comprising:
for the non-synthetic stereo images, generating corresponding disparity maps using light detection and ranging (LiDAR); and
generating the binary depth masks that correspond to the non-synthetic stereo images from the disparity maps; and/or preferably
ii. the training set comprises both synthetic stereo images and non-synthetic stereo images obtained from a camera, the computer-implemented method further comprising:
generating the synthetic stereo images from a given three-dimensional model using rendering software;
generating disparity maps for the synthetic stereo images using pixel depth values calculated by the rendering software; and
generating the binary depth masks that correspond to the non-synthetic stereo images from the disparity maps.

10. The non-transitory computer-readable storage medium of claim 7, claim 8 or claim 9, the actions further comprising:
determining a second depth value lesser than the depth value and corresponding to a nearer portion of the physical object than a portion corresponding to the depth value;
determining a second depth mask model corresponding to the second depth value;
obtaining a second depth mask by applying the depth mask model to the stereo image of the physical scene;
occluding a portion of the virtual object based on the second obtained depth mask, the second obtained depth mask occluding a different portion of the virtual object than the obtained depth mask; and
rendering a non-occluded portion of the virtual object within the stereo image.

11. The non-transitory computer-readable storage medium of any one of claims 7 to 10, the actions further comprising:
determining a second depth value corresponding to an intrusion detection distance from a user;
determining a second depth mask model corresponding to the second depth value;
obtaining a second depth mask by applying the second depth mask model to the stereo image of the physical scene;
identifying, using the second depth mask model, objects closer than the second depth value;
determining that the identified objects represent hazards;
responsive to determining that the identified objects represent hazards, issuing a warning to the user.

12. A computer device comprising:
a computer processor; and
a non-transitory computer-readable storage medium storing instructions that when executed by the computer processor perform actions comprising:
obtaining a stereo image of a physical scene from a camera;
determining at least one depth value of a virtual object to be composited by the application with the stereo image of the physical scene;
determining a depth mask model corresponding to the depth value of the virtual object;
obtaining a depth mask by applying the depth mask model to the stereo image of the physical scene;
occluding a portion of the virtual object based on the obtained depth mask;
rendering a non-occluded portion of the virtual object within the stereo image; and
displaying the rendered portion of the virtual object.

13. The computer device of claim 12, the actions further comprising training the depth mask model, the training comprising:
obtaining, as training input:
a plurality of stereo images,
a plurality of binary depth masks corresponding to the plurality of stereo images, and
the depth value.

14. The computer device of claim 13, wherein:
i. the plurality of stereo images comprises both synthetic stereo images and non-synthetic stereo images obtained from a camera, the computer- implemented method further comprising:
for the non-synthetic stereo images, generating corresponding disparity maps using light detection and ranging (LiDAR); and
generating the binary depth masks that correspond to the non-synthetic stereo images from the disparity maps; and/or preferably
ii. the training set comprises both synthetic stereo images and non-synthetic stereo images obtained from a camera, the computer-implemented method further comprising:
generating the synthetic stereo images from a given three-dimensional model using rendering software;
generating disparity maps for the synthetic stereo images using pixel depth values calculated by the rendering software; and
generating the binary depth masks that correspond to the non-synthetic stereo images from the disparity maps.

15. The computer device of claim 13 or claim 14, the actions further comprising:
i. determining a second depth value lesser than the depth value and corresponding to a nearer portion of the physical object than a portion corresponding to the depth value;
determining a second depth mask model corresponding to the second depth value;
obtaining a second depth mask by applying the depth mask model to the stereo image of the physical scene;
occluding a portion of the virtual object based on the second obtained depth mask, the second obtained depth mask occluding a different portion of the virtual object than the obtained depth mask; and
rendering a non-occluded portion of the virtual object within the stereo image; and/or preferably
ii. determining a second depth value corresponding to an intrusion detection distance from a user;
determining a second depth mask model corresponding to the second depth value;
obtaining a second depth mask by applying the second depth mask model to the stereo image of the physical scene;
identifying, using the second depth mask model, objects closer than the second depth value;
determining that the identified objects represent hazards;
responsive to determining that the identified objects represent hazards, issuing a warning to the user.
